# EUROPEAN PATENT SPECIFICATION

(11) **EP 0 290 843 B1**
(45) Date of publication and mention of the grant of the patent: **14.07.1993**
(21) Application number: 88106508.0
(22) Date of filing: 22.04.1988
(51) Int. Cl.: A23L 1/236, A23L 1/221

(54) **Foodstuffs having improved taste quality**
Nahrungsmittel mit verbesserter Geschmacksqualität
Denrées alimentaires avec une qualité de goût améliorée

(30) Priority: 15.05.1987 JP 118529/87; 23.01.1988 JP 13330/88
(43) Date of publication of application: 17.11.1988
(73) Proprietor: AJINOMOTO CO., INC., Tokyo 104 (JP)
(72) Inventor: Wakabayashi, Hidehiko, Kawasaki-shi Kanagawa-ken (JP); Tsubuku, Takako, Kawasaki-shi Kanagawa-ken (JP); Ueda, Youichi, Kawasaki-shi Kanagawa-ken (JP); Miyajima, Ryuichi, Kawasaki-shi Kanagawa-ken (JP)
(74) Representative: Strehl Schübel-Hopf Groening & Partner

(56) References cited:
- DE-B- 1 517 039
- US-A- 2 860 054
- US-A- 3 464 831
- US-A- 4 123 559
- PATENT ABSTRACTS OF JAPAN, vol. 7, no. 259 (C-195)(1404), 18 November 1983

## Description

The present invention relates to the use of a piperine for the improvement of the aftertaste of foodstuffs.

The taste quality of foodstuffs changes with the compositions of taste components contained therein, and in the case that foodstuffs have miscellaneous tastes or an unpleasant taste, various improvements are made. Among low calorie sweeteners, the use of which has increased tremendously during recent years, for example, aspartame is known as a sweetener free from a bitter or astringent taste or from an irritative taste and having a refreshing sweetness. However, aspartame is somewhat lacking a rich taste in terms of the quality of sweetness. Further, it cannot be denied that aspartame has a tendency to impart a sweet aftertaste, as is characteristically noted with sweeteners having a high titer. To improve such a quality of sweetness of aspartame, hitherto various proposals (Published Unexamined Japanese Patent Appliction Nos. 90667/77, 148255/81, 63068/82, 141760/83, etc.) have been made.

However, the goal of improving the sweetness quality of aspartame and imparting satisfaction comparable to that of sugar has not been sufficiently achieved. Further the method of using these various taste components in combination requires that the component be used in combination in a weight almost the same as or larger than that of aspartame, in most cases. From the aspect of providing a sweetening agent for low calorie foods or general purpose uses, a further improvement has been desired.

In addition, kinds of taste such as an astringent taste or the like, especially a different flavour or miscellaneous flavours left on the tongue as an aftertaste tend to adversely affect the taste quality of foodstuffs as a whole. In such a case, even though the initial taste, etc. is of good quality, the taste quality tends to be injured as a whole due to the impression of the unpleasant aftertaste and, hence it becomes necessary to improve the whole taste including the initial taste and the aftertaste.

The present invention aims to improve the foregoing problems regarding the aftertaste quality of foodstuffs, particularly in removing an unpleasant aftertaste and providing foodstuffs having a good aftertaste quality.

As a result of extensive investigations to solve the foregoing problems, the present inventors have made a finding that foodstuffs having a high hedonic preference in which unpleasant taste characteristics such as an aftertaste, etc. are improved without changing preferable organoleptic properties, physical properties, calorie content, etc. of the foodstuffs can be obtained by incorporating a trace amount of an extract of pepper such as black pepper, white pepper, etc. into foodstuffs of which the taste quality is to be improved.

The present invention has been achieved through such a finding.

This invention relates to the improvement of the taste quality of a foodstuff by incorporating a pepper extract, a piperine-containing fraction or a piperine in a concentration not exceeding the threshold value of the concentration at which the hot taste of pepper becomes appreciable.

Subject matter of the present invention is the use of a piperine for improving the aftertaste of a foodstuff or of a sweetener, which comprises incorporating a pepper extract, a piperine containing fraction or piperines in such an amount that the concentration, calculated as piperines, dissolved in the final product, does not exceed the threshold value of the concentration at which the hot taste of pepper becomes appreciable.

The pepper extract is obtained by extraction of seeds or seed coats of Piper nigrum L. such as black pepper, white pepper, etc., P. longum L., P. retrofractum Vahl., P. officinarum C.D.C., P. clusii C.D.C. or other plants belonging to the genus Piper and containing piperines. The extraction is generally carried out with water but it is also possible to add ethanol for bacteriostatic purposes, etc.. Further, it is also possible to perform the extraction using liquid carbon dioxide or carbon dioxide in a super critical state. Furthermore, it is possible to perform the pepper extraction using oil and fat, etc. In the extraction with water, water and/or an alcohol is added to pepper preferably in the 10 to 100 fold amount. During the extraction step, heating may be or may not be applied, but in order to enhance the extraction efficiency, the extraction is performed for several minutes to several hours, preferably with heating to 60 to 100°C.

The thus obtained extract may be centrifuged, filtered, etc. to obtain the pepper extract.

The amount of the pepper extract to be incorporated varies, depending upon the degree of the effect contemplated, but it is desired that the amount be not greater than the threshold limit value, namely, the amount at which the hot taste inherent to pepper is not appreciable. The threshold limit value varies depending upon the components to be present in the foodstuff, etc., but generally is approximately 1 ppb to 0.1 wt %, calculated as pepper extract (which corresponds to 1 ppb to 1 ppm, preferably 10 ppb to 100 ppb, calculated as piperines) in terms of the concentration (1) dissolved in the final product. (This amount of the pepper extract dissolved in the final product may be different from the amount added to the final product.) If the final product is a concentrate such as a dry beverage mix or a beverage concentrate, the above stated values stand for the concentration (2) in the diluted final product. This concentration can improve the taste quality without any appreciable hot taste.

If, according to the present invention, the aftertaste of a sweetener, in particular a low-calorie sweetener, preferably aspartame, is improved by adding the pepper extract, piperine containing fraction of the pepper extract or piperines to the sweetener itself, it is preferred that the amount of the pepper extract, piperine containing fraction or piperines, calculated as piperines, is 0.5 ppm to 10 wt %, based on the weight of the sweetener, that is, aspartame.

It is also desired that the concentration of the piperine-containing fraction obtained by fractionating the pepper extract, namely a fraction containing one or more compounds selected from piperine, isopiperine, chavicine and isochavicine be not greater than the threshold limit value; the concentration dissolved in the final product is generally 1 ppb to 1 ppm, preferably 10 ppb to 100 ppb, when calculated as piperines. It is also desired that in the case that the foodstuff contains piperines per se in place of the piperine-containing fraction of the pepper extract, the concentration be not greater than the threshold limit value; when the concentration dissolved in the final product is generally 1 ppb to 1 ppm, preferably 10 ppb to 100 ppb, when calculated as piperines, the taste-improving effect is exhibited without any appreciable hot taste inherent to pepper.

A similar effect can also be obtained by incorporating pepper during the preparation of foodstuffs and filtering, etc., instead of adding the pepper extract, etc. In short, it is sufficient that the pepper extract, etc. be contained in the final product but the means, time, etc. for the incorporation are not particularly limited.

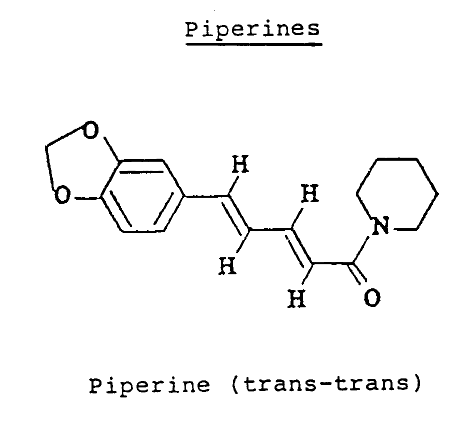

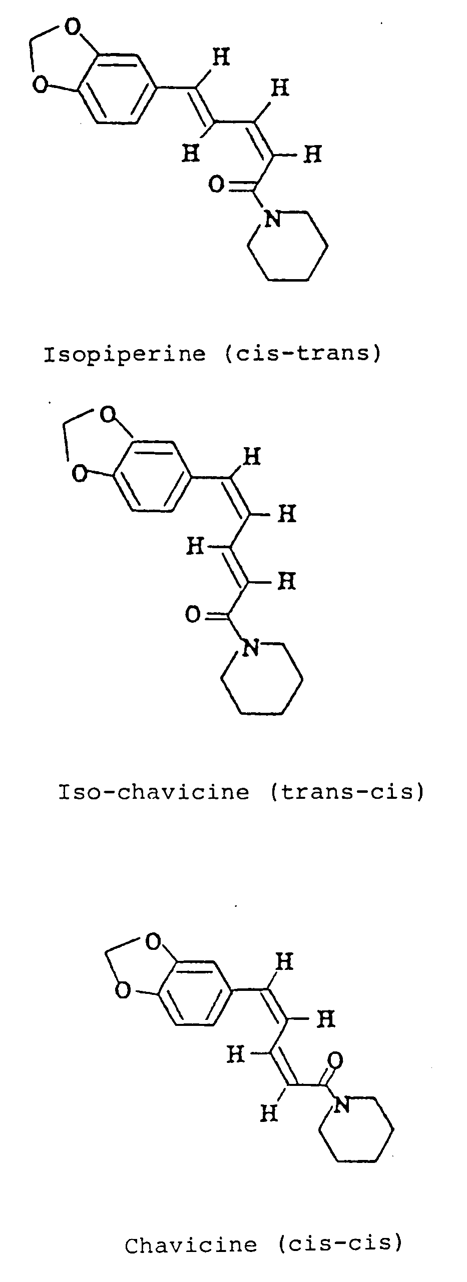

The aftertaste characteristics of foodstuffs, especially a sweet aftertaste, an astringent aftertaste and other unpleasant aftertastes can be improved with the pepper extract, a piperine-containing fraction or piperines. Concretely, in the case of aspartame, the sweet taste left on the tongue as an aftertaste imparts a feeling of physical disorder to people experienced with sweetness of sugar which reduces the preference; but in the co-presence of the pepper extract, a piperine containing fraction or piperines, the aftertaste is cut and a taste quality more similar to sugar can be obtained. Further, when piperines are added to black tea, the astringent (or puckery) aftertaste of black tea is restrained and a clear aftertaste without any appreciable pungent aftertaste can be obtained. In any case, the pleasant rich taste, etc. of foodstuffs is not injured and the flavour and hot taste characteristic for pepper are not appreciable. According to this invention, the aftertaste of foodstuffs is improved and a refreshing taste quality free from a so-called luscious taste, a sharp taste, etc. can be obtained. Accordingly, not only in the case of foodstuffs having an undesirable aftertaste but also in the case that the taste of foodstuffs shall be improved to achieve a refreshing or light taste, it is effective to incorporate the pepper extract, piperine containing fraction or piperines.

With respect to the application of piperine and chavicine to foodstuffs, the use in combination with chemical substances (oxabicyclooctane derivatives and the like) having an aroma or taste-improving effect is disclosed in U.S. Patent Nos. 4 197 328, 4 208 308, 4 225 470, 4 229 314, 4 273 662, 4 294 708, 4 109 309 and 4 454 111. However, the effect of improving the aftertaste, inherent to piperine and chavicine is unknown at all.

The kinds of foodstuffs to which the present invention is applied are not particularly limited but as described above, the pepper extract, piperine containing fraction or piperines exhibit a marked effect in improving the aftertaste such as a sweet aftertaste, an astringent aftertaste, etc. Therefore, the present invention is highly effective for foodstuffs which have sweet and astringent components and in which an improvement of the taste quality is desired. Specific examples of foodstuffs having a sweet taste include various sweeteners (irrespective of their forms such as powders, granules, cubes, pastes, liquid, etc.), beverages such as carbonated beverages, milk beverages, etc.; foods such as candies, fondants, icings, jellies, mousses, chocolates, cookies, cakes, icecreams, sherbets, chewing gums, sweet pickles, dressings, vinegars, sweet wines, etc.; and examples of foodstuffs having an astringent taste include tea and foods containing components such as tannin, etc.. Inter alia, in the case of foodstuffs containing low calorie sweeteners such as aspartame, which is a sweetener having a high titer, alitame, sucrarose, etc., especially in the case of foodstuffs containing aspartame, the aftertaste is improved and foodstuffs having a high preference can be obtained. In addition, the low calorie sweetener also includes saccharin, cyclamate, acesulfame, stevioside, ribaudioside, sugar-added stevia, glycyrrhizin, thaumatin, etc. The amount of the pepper extract, piperine containing fraction or piperines effective for improving the aftertaste quality of low calorie sweeteners varies depending upon various conditions such as kind or concentration of sweeteners, components used in combination, etc. For example, in the case of aspartame, approximately 0.5 ppm to 10 wt %, calculated as piperines, based on the weight of the aspartame, preferably approximately 1 ppm to 10 wt % of the piperine containing fraction or piperines or 1 ppm to 1000 wt % of the pepper extract, based on the weight of the aspartame, may be used.

In materials other than foodstuffs, for example, toothpastes, gargles, oral drugs (including herb medicines), etc., the aftertaste quality can be markedly improved by incorporating the pepper extract, piperine-containing fraction or piperines therein. The effective concentration of the pepper extract, piperine containing fraction or piperines in these cases is the same as described above in the case of the foodstuffs.

According to the present invention, the aftertaste properties of foodstuffs and the like can be markedly improved by incorporating the pepper extract, piperine-containing fraction or piperines therein. The content, of these components is in a trace amount so that the taste quality of foodstuffs as a whole is not affected and the texture is not damaged. Further, in the case of aspartame, etc., sweet beverages and foodstuffs or sweeteners having good quality similar to sugar can be provided in a low calorie form.

### Preparation Example 1

Commercially available black pepper (granules, from Salawaku in the Federation of Malaysia), 52.1 g, was ground and boiled at 90°C for 30 minutes together with water to perform extraction. The extract was centrifuged to remove insoluble matters. Then, the supernatant was freeze dried to give 5.0 g of a dry powder.

### Preparation Example 2

Commercially available white pepper (granules, from Salawaku in the Federation of Malaysia), 51.8 g, was treated in a manner similar to Example 1 to give 3.7 g of a dry powder.

### Preparation Example 3

500 g of 70 % ethanol was added to 25.0 g of commercially available black pepper (granules, from Salawaku in the Federation of Malaysia. The mixture was ground with a homogenizer. After allowing to stand overnight, the suspension was filtered and the obtained extract was concentrated under reduced pressure. Ethanol was removed by distillation. The concentrate was filtered and freeze-dried to give 1.7 g of dry powder .

### Preparation Example 4

Black pepper (granules, from Tericheli in India), 100.8 g, was ground and heated to reflux for 2 hours together with 1 liter of chloroform. The filtered extract was concentrated under reduced pressure. The solvent was removed by distillation to give 7.1 g of dry powder .

### Preparation Example 5

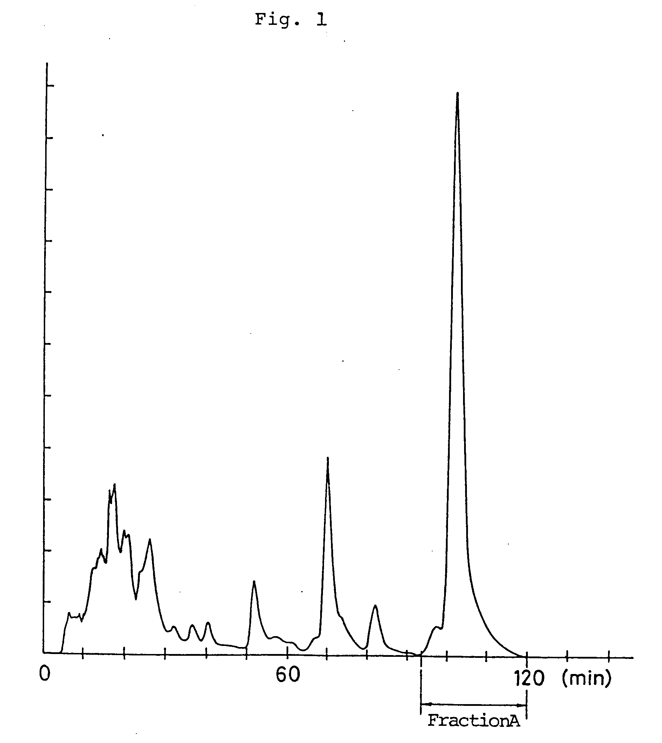

The extract, 37 mg, obtained in Preparation Example 4 was fractionated by high performance liquid chromatography.
- column :: Unicil Q 5C18 (manufactured by Gas Chromatography Industry K.K.), inner diameter of 16.7 mm x length of 250 mm
- column temperature :: 25°C
- eluate :: methanol/water = 3/2 (v/v)
- eluting rate :: 4.0 ml/min
- detection :: UV absorption at 254 nm
- amount of sample :: 10 mg
Portions of Fraction A corresponding to piperines shown in Figure 1 were collected, concentrated under reduced pressure and the freeze-dried to give 4 mg of the piperine fraction.

### Experiment 1

Two samples of (1) 0.04 wt% aqueous solution of aspartame and (2) a solution obtained by adding 2.5 ppm of the extract obtained in Preparation Example 1 to (1) were evaluated by the count method with trained 20 panel members using a 5% aqueous solution of sucrose as a control. The results are shown in Table 1. Regarding the aqueous solution added with the pepper extract, it was evaluated that a sweet aftertaste and luscious taste were restrained and its rich taste was strengthened thereby to markedly improve the taste quality of aspartame. With the concentration of the additive in this experiment, neither pepper flavor nor hot taste were appreciable.

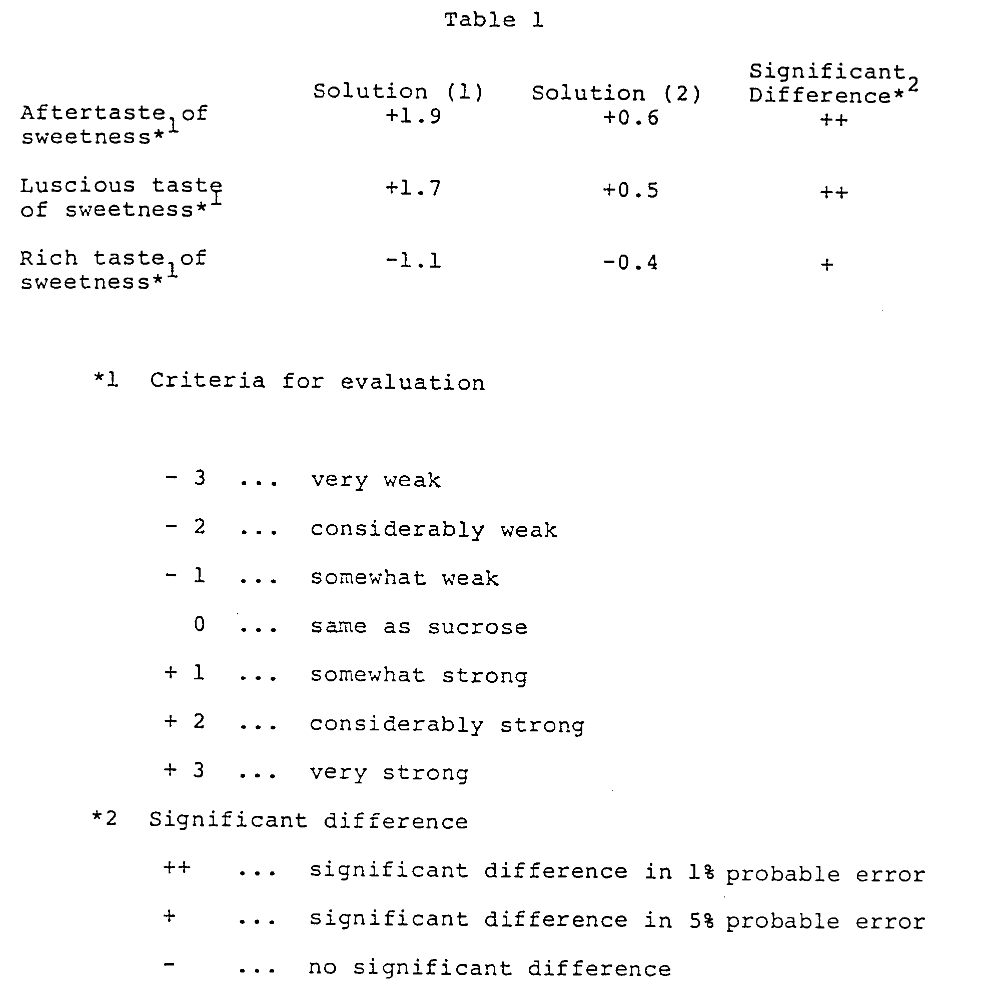

### Experiment 2

Two samples of (1) 0.04 wt% aqueous solution of aspartame and (2) a solution obtained by adding 1.5 ppm of the extract obtained in Preparation Example 4 to (1) were evaluated by the count method with trained 20 panel members using a 5% aqueous solution of sucrose as a control. The results are shown in Table 2. It was evaluated that in the aqueous solution added with the pepper extract a sweet aftertaste and luscious taste were restrained and its rich taste was strengthened thereby to markedly improve the taste quality of aspartame. With the concentration of the additive in this experiment, neither pepper flavor nor hot taste were appreciable.

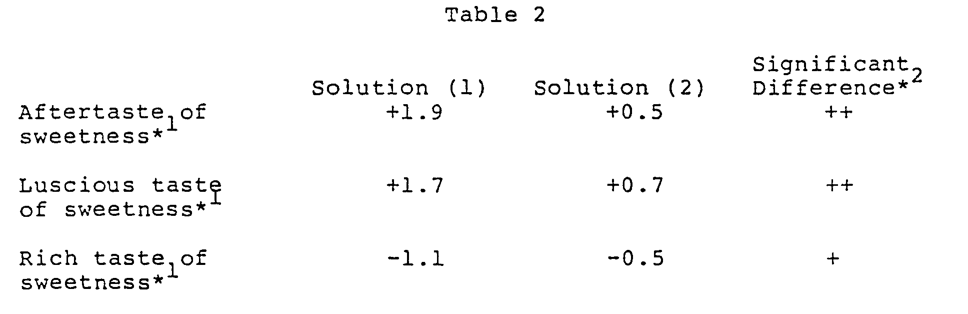

As criteria for evaluation, those similar to Experiment 1 (Table 1) were used.

### Experiment 3

Two samples of (1) 0.04 wt% aqueous solution of aspartame and (2) a solution obtained by adding 50 ppb of the extract obtained in Preparation Example 5 to (1) were evaluated by the count method with trained 20 panel members using a 5% solution of sucrose as a control. The results are shown in Table 3. The evaluation shows that in the aqueous solution added with the pepper extract, the sweet aftertaste and luscious taste were restrained and its rich taste was strengthened thereby to markedly improve the taste quality of aspartame. At the added concentration in this experiment, neither pepper flavor nor hot taste were appreciable.

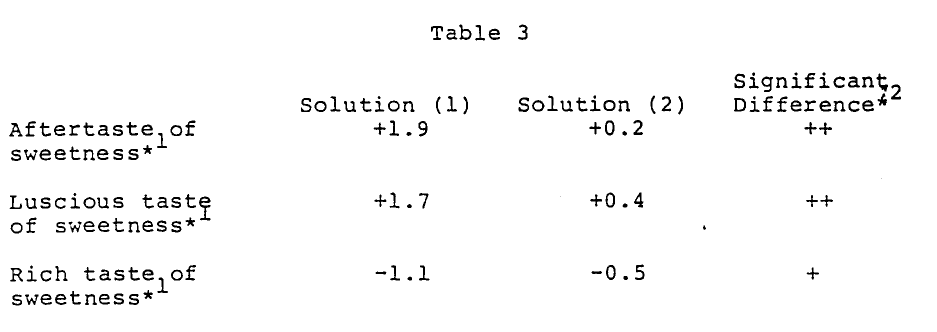

As criteria for evaluation, those similar to Experiment 1 (Table 1) were used.

### Experiment 4

Five samples of (1) a coffee solution containing 5% of sugar, (2) a coffee solution containing 0.025 wt% of aspartame prepared so as to have sweetness equivalent to (1), (3) a coffee solution obtained by adding 5 ppm of the extract obtained in Preparation Example 1 to (2), (4) a coffee solution obtained by adding 1.5 ppm of the chloroform extract obtained in Preparation Example 4 to (2) and a coffee solution obtained by adding 50 ppb of the piperine fraction obtained in Preparation Example 5 to (2) were prepared. With respect to Samples (2), (3), (4) and (5), the 3 point discernment test was performed by trained 15 panel members using Sample (1) as a control. The results are shown in Table 4. Sample (2) was significantly discernable but Samples (3), (4) and (5) were not distinguished from each other. It was noted that by adding a very small amount of the pepper extract, the chloroform extract and the piperine fraction, the taste quality of aspartame became very similar to sugar. With the additive concentration in this experiment, neither pepper flavor nor hot taste were appreciable.

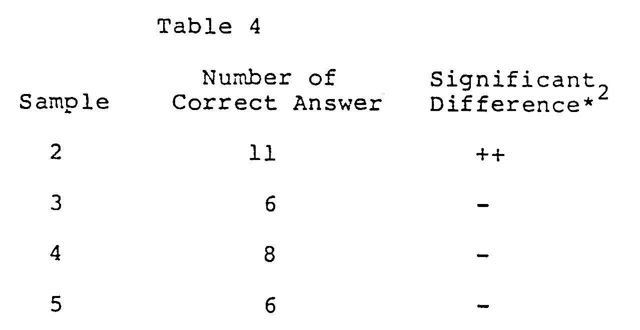

As criteria for the significant difference, those similar to Experiment 1 (Table 1) were used.

### Experiment 5

Using (1) a simple aqueous solution containing 0.04 wt% of aspartame as a control, three of the additives, i.e. (2)the pepper extract obtained in Preparation Example (3) the chloroform extract obtained in Preparation Example 4 and (4) the piperine fraction obtained in Preparation Example 5 were added to (1), respectively, concentrations. These Samples were evaluated by trained 5 panel members. The results are shown in Table 5. The luscious taste were restrained with Sample (2) in 0.1 to 10 ppm, with Sample (3) in 10 ppb to 5 ppm and with Sample (4) in 10 ppb to 1 ppm. With these concentrations, neither pepper flavor nor hot taste was appreciable.

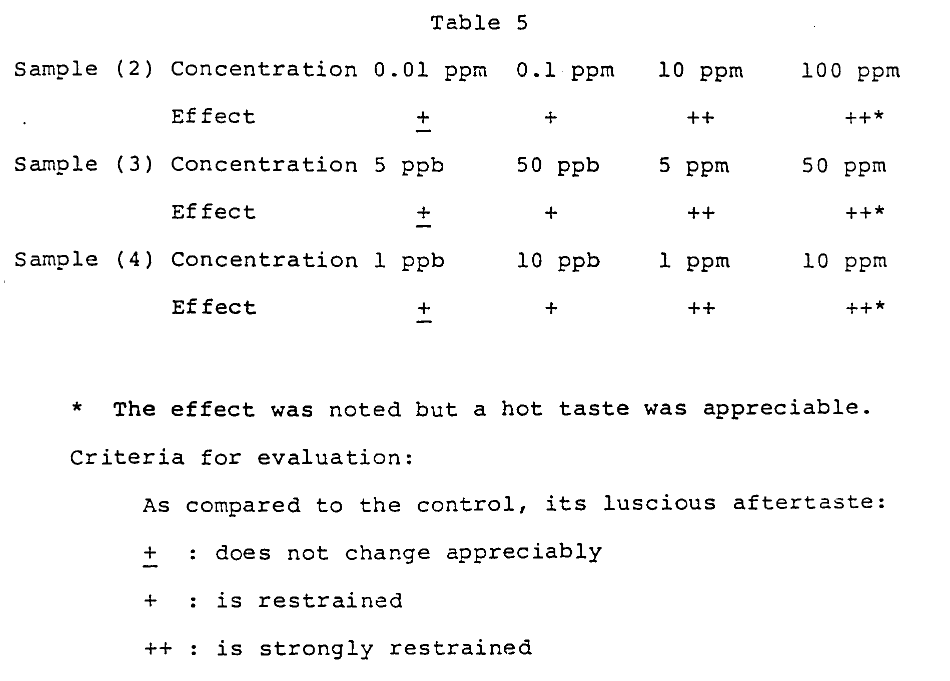

### Experiment 6

An evaluation was performed with respect to 0.04 wt % aspartame aqueous solution and a solution added with 30 ppm of the extract obtained in Preparation Example 2. With the solution added with the pepper extract, a sweet aftertaste and a luscious sweetness were restrained and the effects similar to Experiment 1 were noted.

### Experiment 7

With respect to 0.04 wt% aspartame aqueous solution and a solution added with 5 ppm of the extract obtained in Preparation Example 3, evaluation was performed. The effects similar to Experiment 1 were noted.

### Experiment 8

Two samples of (1) 0.002 wt% aqueous solution of alitame and a (2) a solution obtained by adding 2.5 ppm of the extract obtained in Preparation Example 1 to (1) were evaluated by the count method with trained 20 panellists in a manner similar to Experiment 1, using a 5% aqueous solution of sucrose as a control. The results are shown in Table 6. It was shown that in the aqueous solution added with the pepper extract, the sweet aftertaste and a luscious taste were restrained and its rich taste was intensified, thereby to markedly improve the taste quality of alitame.

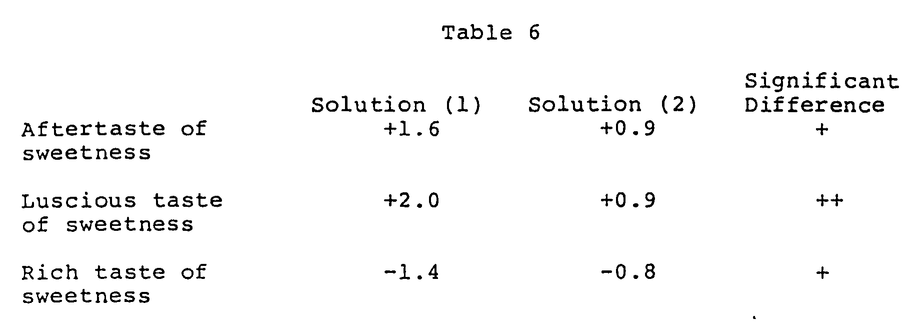

### Experiment 9

Two samples of (1) 0.0007 wt% aqueous solution of sucrarose and (2) a solution obtained by adding 2.5 ppm of the extract obtained in Preparation Example 1 to (1) were evaluated by the count method with trained 10 panellists in a manner similar to Experiment 1, using a 5% aqueous solution of sucrose as a control. The results are shown in Table 6. The evaluation of the aqueous solution added with the pepper extract showed that a sweet aftertaste and a luscious taste were restrained and its rich taste was strengthened thereby to markedly improve the taste quality of alitame.

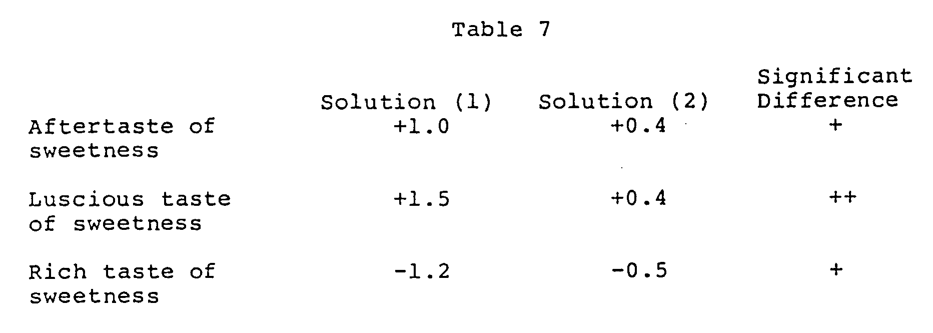

### Experiment 10

Samples of (1) a tea solution containing 0.025 wt% of aspartame and (2) a tea solution obtained by adding 5 ppm of the extract obtained in Preparation Example 1 to (1) were prepared. With respect to Samples (1) and (2), the 2 point comparison test was performed by trained 25 panellists. Twenty out of 25 panellists evaluated that Sample (2) had a weaker astringent taste. It was noted that by adding a very small amount of the pepper extract, the astringent taste of tea was significantly restrained and a refreshing taste was obtained.

### Example 1

### Table sweetener (granules):

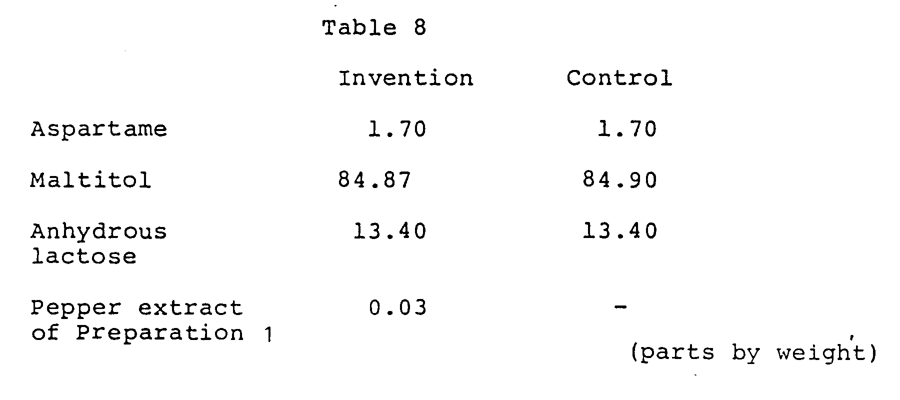

The composition described above was granulated using water as a binder (moisture content of 1% or less) to prepare granulated table sweetener.

The control for the invention also showed a sweetness degree of 4 (1 g corresponds to the sweetness obtained with 4 g of sugar). The two kinds of granulates obtained were added to coffee, tea and plain yoghurt and organoleptic evaluation was performed by the 2 point comparison method with trained 10 panellists using a sucrose control having a sweetness equivalent thereto. The results are shown in Table 9. Each of the granulates was added to coffee, tea and yoghurt, respectively, in the same amount (1.5 g/100 ml).

**Table 9**

| Coffee: | Aftertaste of Sweetness |
|---|---|
| Invention | +0.4 |
| Control | +1.2 |

| Tea: | |
|---|---|
| Invention | +0.8 |
| Control | +1.6 |

| Plain yoghurt: | |
|---|---|
| Invention | -0.1 |
| Control | +0.8 |

As criteria for the evaluation, criteria similar to Experiment 1 (Table 1) were used. In any of the systems, it was noted that by adding a very small amount of the pepper extract, the aftertaste quality of aspartame was markedly improved.

### Example 2

### Lemon lime carbonated beverage

**Table 10**

| | Invention | Control 1 | Control 2 |
|---|---|---|---|
| Sugar | - | 100 g | - |
| Aspartame | 0.5 | - | 0.5 |
| Pepper extract of Preparation Example 1 | 0.005 | - | - |
| Citric acid | 1.25 | 1.25 | 1.25 |
| Sodium citrate | 0.5 | 0.5 | 0.5 |
| Lemon lime essence | 1.0 | 1.0 | 1.0 |
| Soda was added to make the whole amount 1 liter. | | | |

By the composition described above lemon lime carbonated beverages were prepared. With respect to the three kinds of carbonated beverages organoleptic evaluation was performed by the 2 point comparison method with trained 10 panellists using Control 1 (sugar-added beverage as a control). The results are shown in Table 11.

**Table 11**

| Sample | Aftertaste of Sweetness |
|---|---|
| Invention | +0.4 |
| Control 2 | +1.8 |

As criteria for the evaluation, criteria similar to Experiment 1 (Table 1) were used. In any of the systems, it was noted that by adding a very small amount of the pepper extract, the aftertaste quality of aspartame was markedly improved.

### Example 3

### Lemon lime carbonated beverage:

**Table 12**

| | Invention 1 | Control 1 | Control 2 | Invention 2 |
|---|---|---|---|---|
| Sugar | - | 100 g | - | - |
| Aspartame | 0.5 | - | 0.5 | 0.5 |
| Chloroform extract of Preparation Example 4 | 0.0015 | - | - | - |
| Citric acid | 1.25 | 1.25 | 1.25 | 1.25 |
| Sodium citrate | 0.5 | 0.5 | 0.5 | 0.5 |
| Lemon lime essence | 1.0 | 1.0 | 1.0 | 1.0 |
| Piperine fraction of Preparation Example 5 | - | - | - | 5.0 x 10⁻⁵ |
| Soda was added to make the whole amount 1 liter. | | | | |

By the composition described above lemon lime carbonated beverages were prepared. With respect to the four kinds of carbonated beverages obtained, organoleptic evaluation was performed by the 2 point comparison method with trained 10 panellists using Control 1 (sugar-added beverage). The results are shown in Table 13.

**Table 13**

| Sample | Aftertaste of Sweetness |
|---|---|
| Invention 1 | +0.4 |
| Control 2 | +1.8 |
| Invention 2 | +0.1 |

As criteria for the evaluation, criteria similar to Experiment 1 (Table 1) were used. It was noted that by adding very small amounts of the chloroform extract and the pepper extract, the aftertaste quality of aspartame was markedly improved.

## Claims

1. Use of a piperine for improving the aftertaste of a foodstuff, which comprises incorporating a pepper extract, a piperine containing fraction or piperines in such an amount that the concentration, calculated as piperines, dissolved in the final product, does not exceed the threshold value of the concentration at which the hot taste of pepper becomes appreciable.

2. Use of a piperine for the improvement of the aftertaste of a foodstuff according to claim 1 characterized in that the pepper extract is an extract obtainable by extracting pepper with water and/or an alcohol or by using carbon dioxide in liquid or super critical state.

3. Use of a piperine for the improvement of the aftertaste of a foodstuff according to claim 1 or 2, wherein the foodstuff contains a sweetening or astringent component.

4. Use of a piperine for the improvement of the aftertaste of a foodstuff according to claim 1 or 2, wherein the foodstuff is a sweetener, in particular a low calorie sweetener, preferably aspartame.

5. Use of a piperine for the improvement of the aftertaste according to any of the claims 1 to 3, wherein the foodstuff is a sweet food, containing a low calorie sweetener, preferably aspartame.

6. Use of a piperine for the improvement of the aftertaste of a foodstuff according to claim 4, wherein the amount used corresponds to 0.5 ppm to 10 wt.% of the pepper extract, piperine containing fraction of the pepper extract or piperines calculated as piperines and based on the weight of aspartame.

7. Use of a piperine for the improvement of the aftertaste of a foodstuff according to any of the claims 1, 2 or 3, where-in the amount used corresponds to 1 ppb to 1 ppm of the pepper extract, piperine containing fraction or piperine calculated as piperines, dissolved in the final product and based on the weight of the final product.

8. Use of a piperine for the improvement of the aftertaste of a sweetener according to claim 4, wherein the amount used corresponds to 0.5 ppm to 10 wt.% of the pepper extract, piperine containing fraction or piperines, calculated as piperines, based on the weight of the sweetener.

## Patentansprüche

1. Verwendung eines Piperins zum Verbessern des Nachgeschmacks eines Nahrungsmittels, welches die Zugabe eines Pfefferextrakts, einer Piperin enthaltenden Fraktion oder von Piperinen in einer solchen Menge, daß die als Piperine berechnete Konzentration, die in dem Endprodukt gelöst ist, den Schwellenwert der Konzentration nicht überschreitet, bei der der scharfe Geschmack von Pfeffer feststellbar wird.

2. Verwendung eines Piperins zum Verbessern des Nachgeschmacks eines Nahrungsmittels gemäß Anspruch 1, dadurch gekennzeichnet, daß der Pfefferextrakt ein durch Extrahieren von Pfeffer mit Wasser und/oder einem Alkohol oder unter Anwendung von Kohlendioxid in flüssigem oder in überkritischem Zustand erhältlicher Extrakt ist.

3. Verwendung eines Piperins zum Verbessern des Nachgeschmacks eines Nahrungsmittels gemäß Anspruch 1 oder 2, wobei das Nahrungsmittel eine Süßstoffkomponente oder eine adstringierende Komponente enthält.

4. Verwendung eines Piperins zum Verbessern des Nachgeschmacks eines Nahrungsmittels gemäß Anspruch 1 oder 2, wobei das Nahrungsmittel ein Süßstoff, insbesondere ein kalorienarmer Süßstoff, vorzugsweise Aspartam, ist.

5. Verwendung eines Piperins zum Verbessern des Nachgeschmacks gemäß einem der Ansprüche 1 bis 3, wobei das Nahrungsmittel ein süßes Nahrungsmittel ist, das einen kalorienarmen Süßstoff, vorzugsweise Aspartam, enthält.

6. Verwendung eines Piperins zum Verbessern des Nachgeschmacks eines Nahrungsmittels gemäß Anspruch 4, wobei die verwendete Menge 0,5 ppm (0,5 Teil pro 10⁶ Teile) bis 10 Gewichtsprozent des Pfefferextrakts, der Piperin enthaltenden Fraktion des Pfefferextrakts oder der Piperine entspricht, berechnet als Piperine und bezogen auf das Gewicht von Aspartam.

7. Verwendung eines Piperins zum Verbessern des Nachgeschmacks eines Nahrungsmittels, gemäß einem der Ansprüche 1, 2 oder 3, wobei die verwendete Menge 1 ppb (1 Teil pro 10⁹ Teile) bis 1 ppm (1 Teil pro 10⁶ Teile) des Pfefferextrakts, der Piperin enthaltenden Fraktion oder von Piperin, berechnet als Piperine, gelöst in dem Endprodukt und bezogen auf das Gewicht dees Endprodukts, entspricht.

8. Verwendung eines Piperins zum Verbessern des Nachgeschmacks eines Süßstoffes gemäß Anspruch 4, wobei die verwendete Menge 0,5 ppm (0,5 Teil pro 10⁶ Teile) bis 10 Gewichtsprozent des Pfefferextrakts, die Piperin enthaltende Fraktion oder der Piperine, berechnet als Piperine und bezogen auf das Gewicht des Süßstoffes, entspricht.

## Revendications

1. Utilisation d'une pipérine pour améliorer l'arrière-goût d'une denrée alimentaire, qui comprend l'incorporation d'un extrait de poivre, d'une fraction contenant la pipérine ou des pipérines, en quantité telle que la concentration, calculée en pipérines, dissoute dans le produit final, n'excède pas la valeur de seuil de la concentration à laquelle le goût piquant du poivre devient appréciable.

2. Utilisation d'une pipérine pour l'amélioration de l'arrière-goût d'une denrée alimentaire selon la revendication 1, caractérisée en ce que l'extrait de poivre est un extrait obtenu par extraction du poivre par de l'eau et/ou par un alcool ou par utilisation du dioxyde de carbone à l'état liquide ou à l'état super critique.

3. Utilisation d'une pipérine pour l'amélioration de l'arrière-goût d'une denrée alimentaire selon la revendication 1 ou 2, selon laquelle la denrée alimentaire contient un composant édulcorant ou astringent.

4. Utilisation d'une pipérine pour l'amélioration de l'arrière-goût d'une denrée alimentaire selon la revendication 1 ou 2, selon laquelle la denrée alimentaire est un édulcorant, en particulier un édulcorant hypocalorique, de préférence l'aspartame.

5. Utilisation d'une pipérine pou l'amélioration de l'arrière-goût selon l'une quelconque des revendications 1 à 3, selon laquelle la denrée alimentaire est un aliment sucré, contenant un édulcorant hypocalorique, de préférence l'aspartame.

6. Utilisation d'une pipérine pour l'amélioration de l'arrière-goût d'une denrée alimentaire selon la revendication 4, selon laquelle la quantité utilisée correspond à 0,5 ppm à 10 % en poids d'extrait de poivre, de fraction contenant la pipérine de l'extrait de poivre ou des pipéridines, calculée en pipéridines et basée sur le poids de l'aspartame.

7. Utilisation d'une pipérine pour l'amélioration de l'arrière-goût d'une denrée alimentaire selon l'une quelconque des revendications 1, 2 ou 3, selon laquelle la quantité utilisée correspond à 1 ppb à 1 ppm de l'extrait de poivre, de la fraction contenant la pipérine ou des pipérines, calculée en pipérines, dissoute dans le produit final et basée sur le poids du produit final.

8. Utilisation d'une pipérine pour l'amélioration de l'arrière-goût d'un édulcorant selon la revendication 4, selon laquelle la quantité utilisée correspond à 0,5 ppm à 10 % en poids d'extrait de poivre, de fraction contenant la pipérine, ou des pipérines, calculée en pipérines, basée sur le poids de l'édulcorant.
